# EUROPEAN PATENT APPLICATION

(11) **EP 2 107 473 A1**
(43) Date of publication of application: **07.10.2009**
(21) Application number: 08153739.1
(22) Date of filing: 31.03.2008
(51) Int. Cl.: G06F 17/27

(54) **System and method for determining the laguage of teletext**

(71) Applicant: Sony Corporation, Tokyo 108-0075 (JP)
(72) Inventor: Boess, Arne c/o Sony Deutschland GmbH, 70327, Stuttgart (DE)
(74) Representative: Körber, Martin Hans

(57) **Abstract**

The present invention relates to a system for determining teletext language comprising a receiving means (8) for receiving teletext raw data and an analysing unit (5) for determining the language of the received teletext based on analysis of the raw data.

The present invention further relates to a method for determining teletext language.

## Description

The present invention relates to a system and method for determining the language of teletext. Specifically, the present invention relates to a reliable determination of the language of a teletext broadcast.

In the field of broadcasting teletext it is important to reliably determine the language of the broadcast teletext. Specifically in cases where different alphabets or types of characters are used it is important to determine the language in order to properly display the teletext

Presently, there are different methods which are used for the determination of the language. Usually, for determining the language of teletext, the language ID is used, which is broadcast together with the teletext and indicates one to four possible languages of the broadcast teletext. According to a first method the location of the television is used, which is normally input by the user when turning the television on for the first time, and based on the location and on the language ID the language of the teletext is determined.
At present the languages which are used for teletext are divided into eight language groups. Each of these eight language groups comprises one to four languages, whereby only one group comprises a single language, i.e. German. Each group has its own language ID 0 to 7, which is a 3-bit-code. Hereby, in one language group languages are grouped together which are unlikely to occur in the same area. In one group for example Spanish is comprised together with Hebrew.

According to the first method, in cases where a group having a specific language ID comprises several languages the television will decide which language to use depending on the location of the television. With increased globalised reception of television broadcasts it is now possible that language IDs are misinterpreted when signals are received from other parts of the world. A customer for example situated in North Africa having input as location of the television North Africa and who is watching Spanish television will have problems when displaying the Spanish teletext. Spanish has the same language ID as Hebrew so that a television situated in North Africa will display the Spanish teletext as Hebrew which does not use the Latin alphabet and is therefore not readable.

Another possibility of determining the language of teletext is not based on the location but offers a menu for the customer where the customer is enabled to set the teletext language. This has the disadvantage that it is very uncomfortable for the user in case the teletext changes since he must adjust the setting every time in order to view the teletext correctly.

A further possibility is to check which language the user has actually selected as menu language and to display the teletext in the same language. This has the disadvantage that due to the globalisation of broadcast television programs the menu language will often not correspond to the teletext language, which then again may result in an unreadable teletext.

It is therefore the objective problem to overcome the disadvantages of the state of art. Specifically, it is an object of the present invention to provide a system and method for determining the language of teletext in a reliable and user-friendly way.

This object is solved by a system for determining the language of teletext according to claim 1 and by a method for determining the language of teletext according to claim 14.

The present invention relates to a system for determining teletext language comprising a receiving means for receiving teletext raw data and an analysing unit for determining the language of the received teletext based on analysis of the raw data.

The present invention further relates to a method for determining teletext language comprising the steps of receiving teletext raw data and determining the language of the received teletext based on analysis of the raw data.

In a preferred embodiment, the receiving means is further adapted to receive a language identification information ID indicating a maximum of four possible languages for the teletext, and wherein the analysing unit is adapted to determine the language based on raw data analysis and based on the received language identification information ID.

Preferably, the analysing unit is adapted to determine the language according to short word analysis carried out on the raw data.

Advantageously, the system comprises a database for storing short words and for storing the mapping of the short words with different languages, and the analysing unit is adapted to compare short words comprised in the raw data with short words stored in the database.

Further, preferably, the analysing unit is adapted to determine the language according to character analysis carried out on the raw data.

Hereby, a database can be provided for storing the types of mixed characters for different languages, and the analysing unit is adapted to compare the mixed characters in the teletext with the mixed characters stored in the database.

Alternatively or additionally, the system comprises a database for storing the occurrence of characters in different languages, and the analysing unit is adapted to compare the occurrence of characters in the teletext with the occurrence stored in the database.

Preferably, the analysing unit is further adapted to determined the language of the teletext based on a standard method.

The system can comprise an input means for accepting input of location information and wherein the analysing unit is further adapted to determine the language of the teletext based on the location information and the language identification information ID.

Hereby, the analysing unit can be further adapted to compare the language determined with raw data analysis and the language determined based on a standard method.

In a preferred embodiment, the analysing unit is further adapted to compare the language determined with raw data analysis and the language determined based on on a standard method.

In this preferred embodiment, in case that the two determined languages deviate the analysing unit is adapted to calculate the probability of the language determined with raw data analysis matching the real language.

Hereby, the analysing unit is adapted to display the teletext in the language determined with raw data analysis in case the probability reaches a predefined threshold. Otherwise, the analysing unit is adapted to display the teletext in the language determined based on a standard method in case the probability falls below a predefined threshold.

The present invention will now be explained in more detail in the following description of preferred embodiments in relation to the enclosed drawings in which
Figure 1 shows a schematic block diagram of the system according to the present invention,
Figure 2 is a flow-chart showing the process steps of the method according to the present invention,
Figure 3 is a flow-chart showing the process steps according to a specific embodiment of the present invention,
Figure 4 is an overview of the different analysis methods adopted by the present invention and
Figure 5 is a flow-chart showing the process steps of a further specific embodiment of the present invention.

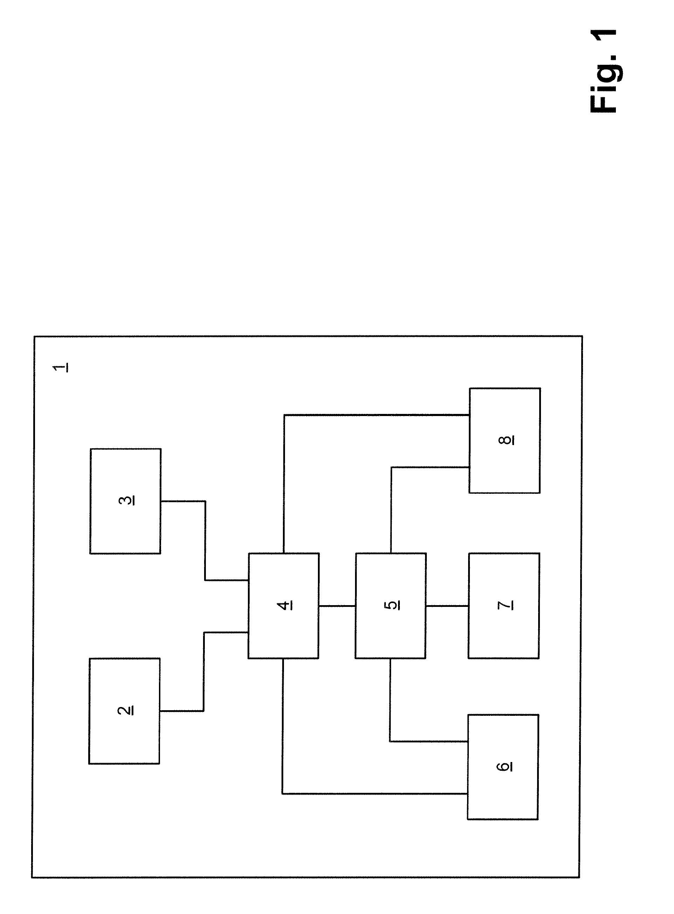

Figure 1 is a schematic block diagram of the components comprised in the inventive system. The system 1 can be embedded or integrated into an electronic device, specifically into a television or any other electronic device having the functionalities of a television, i.e. which is adapted to receive and display teletext.. The term teletext as used in the present application is intended to cover all types of teletext, broadcast teletext or videotext representing messages, notices, texts or pictographic representations, which can be displayed by the TV or any other device having the functionality of a TV and which are transmitted together with a television signal. Specifically, the term teletext as used in the present application refers to text having a codepage comprising 128 different characters or symbols. Specifically, in the teletext each character or symbol can be represented by a 7-bit sequence.

The term "character" or "symbol" when used in the present specification relates to any type of letter comprising letters of different languages, numbers, punctuation marks, special signs or any other symbol used for displaying text.

The system 1 comprises a processing unit 4 which is connected to and in data communication with the other components and supervises the transmission, reception, deletion or the like of data or information within the inventive system 1. The system 1 comprises an input means 2 which can be any interface adapted to accept input by a user. The input means 2 can for example be a keypad, a touchpad, a mouse, recognition of speech, any other types of buttons or an interface for enabling wireless or wired transmission of data or information. Specifically in case that the system 1 is incorporated into a television, the input means 2 can be an infrared interface adapted to receive signals from a remote controller.

The system 1 further comprises a display 3 which is adapted to display information, application, programs, menus or teletext to a user.

A receiving means 8 serves for receiving the teletext data which is wirelessly or wired broadcast and is additionally adapted to receive any other information related to television programs or other broadcast programs. The receiving means 8 is further adapted to receive the language ID of the broadcast teletext. The teletext data can be transmitted within a blanking interval of the television signal or can also be transmitted as a packetised elementary stream which is part of the transport stream. The language ID hereby comprises a 3-bit-sequence indicating one of the eight language groups.

The system 1 further comprises a database 7, in which data and parameters are stored allowing an analysing unit 5 to analyse the teletext data in order to determine the language.

Optionally, a storage 6 can be provided for storing the teletext data which have been received by the receiving means 8. In case that a storage 6 is provided, the database 7 can also be implemented within or as a part of the storage 6.

According to the main idea of the present invention the receiving means 8 serves for receiving the teletext raw data which are then analysed by the analysing unit 5 prior to displaying the teletext on the display 3. The analysing unit 5 reads out data stored in the database 7 in order to determine the language of the teletext raw data.

In order to reduce the amount of data transmitted when transmitting teletext, the symbols or characters of the teletext are usually transmitted with 7-bit sequences. That means that the respective codepage comprises 128 characters or symbols each being identified with a 7-bit sequence from 0 to 127. These numbers from 0 to 127 are referred to as "raw data". For each language a different codepage exists comprising different characters and symbols. Due to the restriction of the teletext codepages to 128 characters or symbols, the codepages of some languages do have only a few characters or symbols in common. For example the codepage for the Latin alphabet used for displaying English and the codepage for the Greek alphabet only have a few characters or symbols in common, e.g. the "space" which in both codepages has the number 32, but the symbols of the alphabet are completely different. Likewise, the number 65 in most codepages stands for the letter "A", but in the codepage for Greek or Hebrew the number 65 will stand for another letter.

This is an important difference to other types of text which refer to larger codepages, e.g. the ASCII code which uses 8-bit sequences and therefore refers to a codepage having 256 different symbols or characters. In the ASCII code every codepage comprises a main set of characters which remains unchanged in every codepage and additionally comprises variable sets of characters which are changed depending on the used language, e.g. for Greek or Hebrew. Due to the main set being unchanged, every text referring to an ASCII codepage therefore refers to fixed characters and symbol comprised in the main set. Therefore, even in case the wrong codepage is used when displaying the text, the text will comprise some false characters or symbols but the text as a whole will still be comprehensible, since most characters refer to the unchanged main set.

The present invention therefore is concerned with the specific problem of teletext data referring to smaller codepages having only a few characters or symbols in common. This problem does not arise with the ASCII code or the even larger UNICODE. A further specific characteristic of teletext is the language ID which is usually transmitted together with the teletext and which is advantageously but not mandatory used together with the raw data analysis for determining the language. Since due to the language ID the number of possible languages is limited to a maximum of four languages, the raw data analysis has to be adapted to this fact, i.e. the raw data analysis has to be more accurate when differing languages comprised in the same language group.

According to the present invention the analysing unit 5 is further adapted to carry out a language determination according to the state of art, i.e. depending on the received language ID and on the location of the system 1, according to the settings of the user, by checking the actual menu language or according to any other known method for determining teletext language.

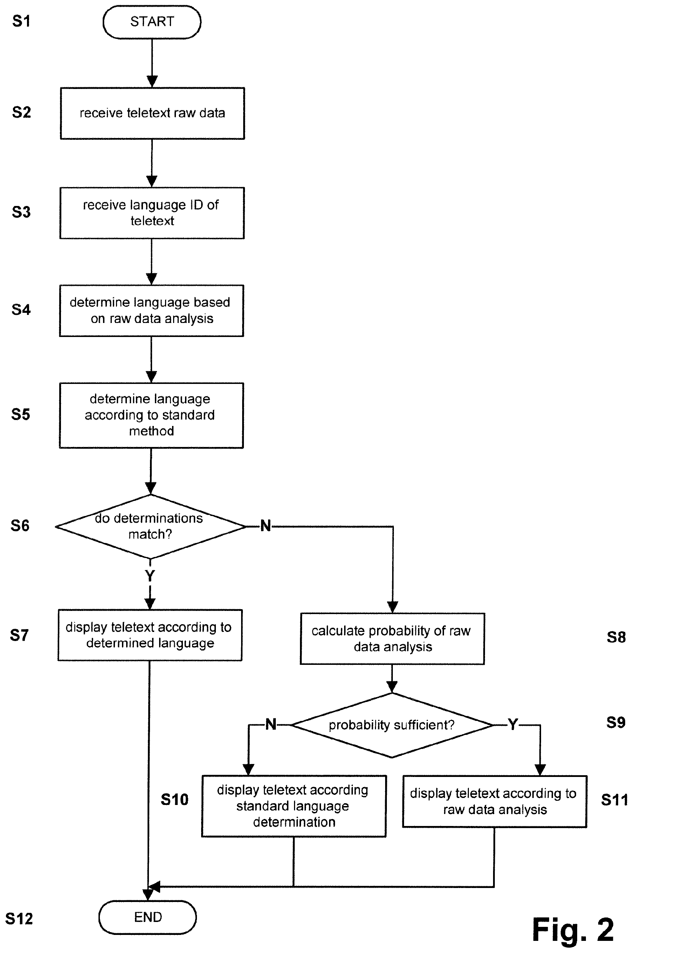

The main idea of the present invention will be explained in the following with reference to figure 2. The process starts in step S1, for example with switching on the electronic device into which the system 1 is integrated or with the selection of a specific television program.

In the next step S2 the receiving means 8 receives teletext raw data. Raw data, as previously explained, according to the present invention are hereby the 7-bit sequences indicating numbers from 1 to 127 which are directly analysed before being translated into displayable characters.

In the next step S3 the receiving means 8 receives the language ID of the broadcast teletext. The step S3 hereby can be carried out concurrently with step S2, i.e. the language ID can be received together with the teletext raw data. With the language ID the language of the teletext is limited to a number of one to four languages.

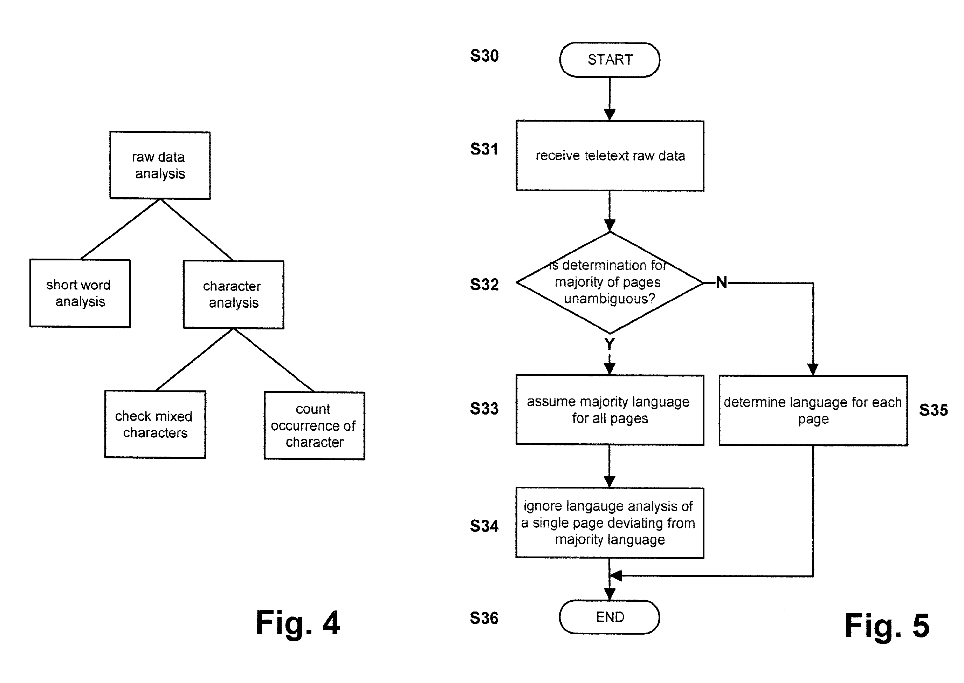

In the next step S4 the analysing unit 5 will analyse the raw data and determine the language based on the raw data analysis and based on the limited possibilities due to the language ID. The different methods which can be carried out for determining the language based on raw data analysis will be later explained with reference to figure 4.

In the next step S5 the analysing unit 5 determines the language of the teletext according to a standard method, e.g. by using the location information and the language ID. In case the electronic device is switched on for the first time the system via the input means 2 accepts an input of location information, i.e. of information, on which position on earth or in which region the system is currently located. In case a storage 6 is provided this information can be permanently stored in the storage. In this case the user has to input the location information only once. Otherwise, the input of location information will be requested by the system 1 anytime the user switches the electronic device on, i.e. by displaying a respective message on the display 3. Alternatively, the standard determination may be accomplished by accepting a user setting of the actual teletext language, by checking the actual language of the menu or by any other standard method.

Alternatively, the steps S4 and S5 can be carried out at the same time or step S5 can be carried out before step S4.

After determining the language in two different ways, namely by analysing raw data and by determining the language according to a standard method, the analysing unit 5 in step S6 checks whether the two determinations match. This means that the analysing unit 5 compares the language which was determined based on raw data analysis with the language which was determined according to a standard method. If the analysing unit 5 in step S6 determines that the two determinations match then in the next step S7 the teletext will be displayed according to the determined language.

Otherwise if the analysing unit 5 in step S6 determines that that two determined languages do not match, the analysing unit in a following step S8 will calculate the probability of the raw data analysis. That means the analysing unit 5 calculates the probability indicating the likelihood that the raw data analysis matches the real language.

In the next step S9 the analysing unit 5 checks whether the calculated probability is sufficient, i.e. whether the calculated probability reaches a predefined threshold. If the probability of the raw data analysis is determined to be sufficient in step S9 then in the next step S11 the teletext is displayed in a language according to the raw data analysis.

Otherwise, if the analysing unit in step S9 determines that the probability is not sufficient, then in step S10 the teletext will be displayed according to the language determined according to the standard method.

The process ends in step S12.
In an alternative embodiment it is possible that the steps of determining the language according to the standard method and the steps of comparing different methods of determining the language can be omitted. The process can for example be based only on the analysis of raw data without comparing this analysis with further language determinations and without calculating the probability of raw data analysis.

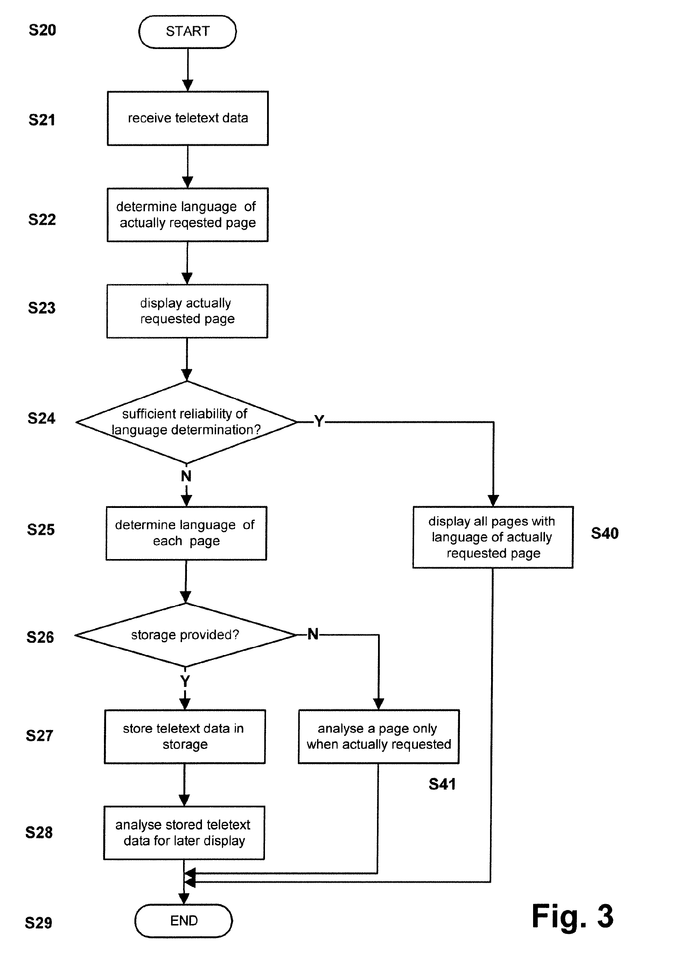

As previously explained the storage 6 is optional. In figure 3 therefore the process steps are shown depending on the storage 6 being present or not. The process starts in step S20 for example with switching on the electronic device into which the system 1 is embedded or with the selection of a specific television program. In the following step S21 the receiving means 8 receives the teletext data.

In the next step S22 the language of the teletext page which is actually requested is determined. The determination hereby is accomplished according to the different possibilities described with respect to figure 2, i.e. the language can be determined only by raw data analysis or otherwise the language can be determined by a comparison of different determination methods and probability calculation of the different determination methods.

In the next step S24 the processing unit 4 checks whether the language determination was reliable. This can for example be accomplished by checking the number of languages contained within the group of the received language ID. If for example only a single language is contained within this group, then the determination is unambiguous and therefore reliable. The determination is also regarded as reliable in case that the raw data analysis and the standard method have given the same result. Otherwise, like in step S9 of figure 2, the probability of the raw data analysis matching the real language can be calculated or the previously already calculated probability can be checked. If this probability falls under a specific threshold, then the determination is not regarded as reliable.

If in step S24 the processing unit 4 has decided that the determination of the language was reliable, then in the next step S40 the determined language will be assumed for all pages of these teletext data and all pages will be displayed in step S40 with the language of the actually requested page. Otherwise, if the processing unit in step S24 regards the determination was not reliable, then in the next step S25 the language for each page will be determined separately.

Here for, in the next step S26 it is checked, whether a storage 6 is provided. If no storage 6 is provided, then the analysing unit 5 will determine the language of each page when the respective page is actually requested by the user.

Otherwise, if a storage 6 is provided, then in the next step S 27 the teletext data will be stored in the storage 6 and in the following step S28 the stored teletext data will be analysed for later display, i.e. the language for each page will be determined and stored together with the respective page, so that when the page is requested for display, the page can be displayed very fast since the language determination has already been accomplished.

The process ends in step S29.

In the following the different methods of analysing teletext raw data will be explained with reference to figure 4. Generally, the present invention bases on the analysis of the raw data, i.e. the pure byte sequences. Hereby, a sort of pattern recognition is performed and the recognised patterns are determined with patterns stored in the database 7 in order to determine the language. The raw data analysis can be divided into short word analysis and into character analysis.

In case of a short word analysis short words which are comprised in the teletext data are compared with short words stored in the database 7, i.e. byte sequences within the raw data are compared with byte sequences stored in the database 7 Every language comprises several short words which are either unique for the respective language or which are only comprised in a few languages. These short words are words which are often used in every language so that the probability that such a short word is used in the actually analysed page is very high. Short words hereby usually are words of two or three characters, but the present method can also be applied to words having four, five or some more characters.

The word "the" for example is a characteristic word for the English language. This word has a high probability to appear on every page of an English teletext

Still referring to the example of the word "the" the short word analysis will be explained in detail. In case the number sequence 32 46 102 105 32 is detected within a teletext page and further in case that a language ID was received indicating that the only possible languages are English, Spanish or Hebrew, then the above sequence will be analysed with regard to the possible languages. 32 in every language is the space character, thereby it can be detected that the number sequence 46 102 105 is a short word. Now for every language the raw data, i.e. the short word will be checked by comparing it with the entries in the database 7. In case of the English language the number sequence 46 102 105 will be looked up in the database 7 and it will be determined, that this sequence is a common short word in English, i.e. in the present example is the word "the". Likewise, also for Spanish and Hebrew the sequence will be looked up in the database 7 and for Spanish for example no short word having this sequence will be determined and for Hebrew a very uncommon word having this sequence will be determined.

For every language then the probability is calculated indicating whether this short word provides a reliable language determination. The probability can be indicated by a percentage or by a number lying between 0 and 1. Otherwise, a weighting or evaluation number can be calculated, e.g. for the present example 25 for English, 10 for Hebrew and 0 for Spanish. Optionally, also other short words can be analysed and afterwards the weighting numbers or other probability indicators are summed up and the language having the highest sum or other corresponding probability is chosen as actual language.

For determining the reliability, different thresholds can be defined. For example, the probability difference between the language having the highest probability and the other languages needs to be over a specific threshold. Only in this case the language detection is regarded as reliable. In case of the above example when only using the short word "the" English would be determined as actual language with a high and sufficient probability.

A further example is the word "in". This word is for example comprised in English and Spanish. In case that such a word is detected, there is the possibility that the analysing unit 5 determines the language as Spanish whereas the right language would be English. In this case the probability would not be regarded as sufficient. In order to increase the reliability several short words can be analysed. Hereby, it is again to be noted, that the analysis is carried out on the numbers 0 to 127, i.e. on the pure bytes and not on real words.

It is to be understood that above examples are not intended to limit the present invention but to only exemplary describe the general mechanism of detecting short words in the teletext, comparing these short words with short words stored in the database 7 for the languages contained in the specific language group and determining the language according to the probability of the one or more analysed short words.

In the data base 7 several short words of every language are stored and together with the word the respective weighting factor or probability is stored indicating how reliable the analysis based on the respective short words is. When calculating the probability indicating how reliable the language determination is these stored information us used. Further, as previously described, the analysing unit 5 is able to calculate the probability even in cases where the analysis was based on several different short words.

The other type of raw data analysis is character analysis. In this case not words, i.e. sequences of several bytes are analysed, but single characters are analysed. The character analysis hereby can be subdivided into a mixed characters check and a counting of the occurrence of characters.

Every teletext refers to a specific codepage comprising the characters of the respective teletext. In some cases characters are displayed as mixed characters, i.e. composed of two different characters. For example, the character "á" is composed of the character "a" and the character "''. Some of these mixed characters are not very common, so that the respective language can be determined by using the data stored in the database 7 and comparing those data to the language ID.

A further possibility is a character footprint, i.e. counting how often a specific character occurs. This is a common method for analysing languages but it requires a lot of data to be able to make an assumption. This method could be preferably used in case that stored teletext data is analysed. The usual occurrence of characters within the different languages is also stored in the data base 7 and together with the characters a probability is stored in the data base, how reliable a determination based on the occurrence of the different characters or a combination of different characters is. Depending on the reliability the analysing unit 5 can calculate the probability of the determined language matching the real language of the teletext.

A further possibility of determining the language comprising an analysis based on raw data is shown in figure 5. The process starts in step S 30, i.e. with switching on the electronic device. In the following step S 31 the receiving means 8 receives the teletext raw data.

In case that several pages have been analysed by the analysing unit in the step S32 the analysing unit can check whether the language determination for the majority of pages in unambiguous, i.e. if the language determination has high or sufficient probability. Hereby, the pages sometimes are transmitted in blocks of 100 pages, therefore it is also possible to check the language determination within each of those blocks separately.

In case that the determination for the majority of pages or the majority of pages within a block of 100 pages is unambiguous then in the next step S33 the analysing unit 5 assumes this determined language for all pages and in the following step S34 ignores any analysis deviation from this majority language. This idea bases on the fact, that in general a set of teletext pages comprises teletext in the same language. If therefore based on a majority of pages an unambiguous language determination was possible, it can be assumed that the rest of the pages is displayed in the same language even in case an analysis deviates from this determined language.

Otherwise if in step S 32 the analysing unit 5 determines that the language for several pages was ambiguous or not reliable then in step S 35 the analysing unit 5 determines the language for each page as previously described.

It is to be noted, that the analysing unit 5 can also use a mixture of the different raw data analysis methods which have been described. I.e. the analysing unit 5 may carry out a short word analysis as well as a counting of the occurrence of the characters. in case the two determined languages differ, the analysing unit 5 can calculate the reliability of both determinations and assume the language with the higher probability. With the present invention it is possible to reliably determine the language which should be used for displaying teletext. According to the present invention further the recognition of a mismatch between teletext data and the language which would normally be used to display the teletext can be detected. The present invention further enables a more comfortable handling for the user since the user does not have to manually select a language from a menu to make the displayed teletext readable.

## Claims

1. System for determining teletext language comprising
a receiving means (8) for receiving teletext raw data and
an analysing unit (5) for determining the language of the received teletext based on analysis of the raw data.

2. System according to claim 1,
wherein the receiving means (8) is further adapted to receive a language identification information ID indicating a maximum of four possible languages for the teletext, and wherein the analysing unit (5) is adapted to determine the language based on raw data analysis and based on the received language identification information ID.

3. System according to claim 1 or 2,
wherein the analysing unit (5) is adapted to determine the language according to short word analysis carried out on the raw data.

4. System according to claim 3,
further comprising a database (7) for storing short words and for storing the mapping of the short words with different languages, and
wherein the analysing unit (5) is adapted to compare short words comprised in the raw data with short words stored in the database (7).

5. System according to any of claims 1 to 4,
wherein the analysing unit (5) is adapted to determine the language according to character analysis carried out on the raw data.

6. System according to claim 5,
further comprising a database (7) for storing the types of mixed characters for different languages, and
wherein the analysing unit (5) is adapted to compare the mixed characters in the teletext with the mixed characters stored in the database (7).

7. System according to claim 4 or 5,
further comprising a database (7) for storing the occurrence of characters in different languages, and
wherein the analysing unit (5) is adapted to compare the occurrence of characters in the teletext with the occurrence stored in the database (7).

8. System according to any of the preceding claims,
wherein the analysing unit (5) is further adapted to determine the language of the teletext based on a standard method.

9. System according to claim 8,
further comprising an input means (2) for accepting input of location information and wherein the analysing unit (5) is further adapted to determine the language of the teletext based on the location information and the language identification information ID.

10. System according to claim 8 or 9,
wherein the analysing unit (5) is further adapted to compare the language determined with raw data analysis and the language determined based on a standard method.

11. System according to claim 10,
wherein in case that the two determined languages deviate the analysing unit (5) is adapted to calculate the probability of the language determined with raw data analysis matching the real language.

12. System according to claim 11,
wherein the analysing unit (5) is adapted to display the teletext in the language determined with raw data analysis in case the probability reaches a predefined threshold.

13. System according to claim 11 or 12,
wherein the analysing unit (5) is adapted to display the teletext in the language determined based on a standard method in case the probability falls below a predefined threshold.

14. Method for determining teletext language comprising the steps of receiving teletext raw data and
determining the language of the received teletext based on analysis of the raw data.

15. Method according to claim 14,
comprising the steps of receiving a language identification information ID indicating a maximum of four possible languages for the teletext, and
determining the language based on raw data analysis and based on the received language identification information ID.

16. Method according to claim 14 or 15,
comprising the step of determining the language according to short word analysis carried out on the raw data.

17. Method according to claim 16,
comprising the steps of storing short words and storing the mapping of the short words with different languages in a database (7), and
comparing short words comprised in the raw data with short words stored in the database (7).

18. Method according to any of claims 14 to 17,
comprising the step of determining the language according to character analysis carried out on the raw data.

19. Method according to claim 18,
comprising the steps of storing the types of mixed characters for different languages, and
comparing the mixed characters in the teletext with the mixed characters stored in the database (7).

20. Method according to claim 18 or 19,
comprising the steps of storing the occurrence of characters in different languages, and
comparing the occurrence of characters in the teletext with the occurrence stored in the database (7).

21. Method according to any of the preceding claims,
further comprising the step of determining the language of the teletext based on a standard method.

22. Method according to claim 21,
comprising the step of accepting input of location information and
determining the language of the teletext based on the location information and the language identification information ID.

23. Method according to claim 21 or 22,
comprising the step of comparing the language determined with raw data analysis and the language determined based on a standard method.

24. Method according to claim 23,
in case that the two determined languages deviate comprising the step of calculating the probability of the language determined with raw data analysis matching the real language.

25. Method according to claim 24,
comprising the step of displaying the teletext in the language determined with raw data analysis in case the probability reaches a predefined threshold.

26. Method according to claim 24 or 25,
comprising the step of displaying the teletext in the language determined based a standard method in case the probability falls below a predefined threshold.
